# EUROPÄISCHE PATENTSCHRIFT

(11) **EP 4 247 586 B1**
(45) Veröffentlichungstag und Bekanntmachung des Hinweises auf die Patenterteilung: **01.01.2025**
(21) Anmeldenummer: 21819073.4
(22) Anmeldetag: 18.11.2021
(51) Int. Cl.: B23K 26/38, B23K 26/70, B23K 37/047

(54) **ENTLADESTATION FÜR EINE BEARBEITUNGSMASCHINE SOWIE BEARBEITUNGSMASCHINE ZUM SCHNEIDENDEN BEARBEITEN VON ROHR- ODER STANGENFÖRMIGEN WERKSTÜCKEN**
UNLOADING STATION FOR A MACHINE TOOL, AND MACHINE TOOL FOR CUTTING TUBULAR OR ROD-SHAPED WORKPIECES
STATION DE DÉCHARGEMENT POUR MACHINE D'USINAGE ET MACHINE D'USINAGE POUR L'USINAGE PAR DÉCOUPE DE PIÈCES EN FORME DE TUBES OU DE BARRES

(30) Priorität: 19.11.2020 DE 102020130607
(43) Veröffentlichungstag der Anmeldung: 27.09.2023
(73) Patentinhaber: TRUMPF Werkzeugmaschinen SE + Co. KG, 71254 Ditzingen (DE)
(72) Erfinder: JARSCH, Florian, 71254 Ditzingen (DE)
(74) Vertreter: Trumpf Patentabteilung
(86) Internationale Anmeldenummer: PCT/EP2021/082223
(87) Internationale Veröffentlichungsnummer: WO 2022/106581

(56) Entgegenhaltungen:
- CN-A- 110 142 522
- DE-U1- 202008 014 371
- US-A1- 2012 219 396

## Beschreibung

Die Erfindung betrifft eine Entladestation für eine Bearbeitungsmaschine zum schneidenden Bearbeiten von rohr- oder stangenförmigen Werkstücken sowie eine solche Bearbeitungsmaschine.

Aus der EP 2 827 206 A1 ist eine Bearbeitungsmaschine zur schneidenden Bearbeitung von stangen- oder rohrförmigen Werkstücken bekannt. Diese Bearbeitungsmaschine umfasst eine Beladestation zur Aufnahme von zu bearbeitenden Werkstücken. Von dieser Beladestation aus werden die Werkstücke der Bearbeitungsstation zugeführt. In der Bearbeitungsstation kann ein Schneiden oder Abtragen des zu bearbeitenden Werkstückes erfolgen, beispielsweise mittels spanabhebenden Werkzeugen und/oder mittels eines Schneidstrahls, insbesondere Laserstrahls. Nach der Bearbeitung des Werkstücks wird das Werkstück aus der Bearbeitungsstation herausgeführt und in eine nachfolgende Entladestation übergeführt. Die in die Entladestation übergeführten Werkstücke können seitlich ausgeschleust werden, indem diese an eine seitlich an die Entladestation angrenzende Werkstückauflage übergeführt werden. Diese Werkstückauflage kann mehrere bearbeitete Werkstücke aufnehmen. Von dieser Werkstückauflage werden die Werkstücke manuell entnommen und in ein Magazin oder einen Zwischenspeicher übergeführt. Die DE 20 2008 014371 U1 offenbart eine Entladestation mit einer Entladeeinrichtung und einer Ausschleuseinrichtung zum selektiven Ausschleusen von Werkstücken aus der Entladeeinrichtung.

Der Erfindung liegt die Aufgabe zugrunde, eine Entladestation für eine Bearbeitungsmaschine sowie eine Bearbeitungsmaschine zum schneidenden Bearbeiten von rohr- oder stangenförmigen Werkstücken vorzuschlagen, durch welche die Produktivität in der Bearbeitung der stangen-oder rohrförmigen Werkstücke erhöht wird.

Diese Aufgabe wird gemäß Anspruch 1 durch eine Entladestation für eine Bearbeitungsmaschine gelöst, welche eine Ausschleuseinrichtung zum selektiven Ausschleusen von bearbeiteten Werkstücken aus der Entladeeinrichtung aufweist, wobei die Ausschleuseinrichtung eine Längsfördereinrichtung umfasst, die sich zumindest zwischen der Entladeeinrichtung und der Werkstückauflage erstreckt und welche eine Werkstückweiche umfasst, durch die das aus der Entladeeinrichtung abzuführende Werkstück in die Längsfördereinrichtung oder auf die Werkstückauflage überführbar ist. Dies ermöglicht, dass durch die zusätzliche Ausschleusmöglichkeit der bearbeiteten Werkstücke auf eine Längsfördereinrichtung ein zweiter Transportweg geschaffen ist, um die bearbeiteten Werkstücke aus der Entladeeinrichtung abzuführen. Bevorzugt kann vorgesehen sein, dass am Ende der Längsfördereinrichtung eine Handhabungseinrichtung vorgesehen ist, durch welche eine automatisierte Entnahme der Werkstücke aus der Längsfördereinrichtung erfolgt.

Bevorzugt ist vorgesehen, dass die Ausschleuseinrichtung an einer oder beiden Längsseiten der Entladeeinrichtung vorgesehen ist. Dadurch wird ermöglicht, dass eine hohe Speicherkapazität in der Aufnahme von bearbeiteten Werkstücken vorgesehen ist, wodurch auch ein schnelles Abführen von bearbeiteten Werkstücken aus der Entladeeinrichtung ermöglicht ist.

Die Werkstückweiche der Ausschleuseinrichtung weist bevorzugt eine Führungsfläche auf, welche zum Überführen des bearbeiteten Werkstücks von der Entladeeinrichtung zur Werkstückauflage einen durch die Längsfördereinrichtung gebildeten Spalt schließt. Dadurch kann das Abführen der bearbeiteten Werkstücke, wie bei bislang unmittelbar an der Entladeeinrichtung zugeordneten Werkstückauflagen, ermöglicht sein.

Die Werkstückweiche ist gemäß einer bevorzugten Ausführungsform als ein Anschlagbalken ausgebildet, der entlang der Werkstückauflage verfahrbar ist. Dadurch wird eine einfache Ansteuerung einer Werkstückweiche ermöglicht. Darüber hinaus kann eine solche Werkstückweiche sich auch über eine große Länge entlang der Entladeeinrichtung erstrecken. Beispielsweise werden rohr- oder stangenförmige Werkstücke mit einer Länge von 4 bis 6 m bearbeitet.

Die als Anschlagbalken ausgebildete Werkstückweiche umfasst bevorzugt die Führungsfläche und eine Anschlagfläche, wobei in einer Schließposition des Anschlagbalkens zur Längsfördereinrichtung die Führungsfläche den Spalt zwischen der Entladeeinrichtung und der Werkstückauflage schließt und in einer Ausschleusposition des Anschlagbalkens die Anschlagfläche das bearbeitete Werkstück in die Längsfördereinrichtung überführt. Durch eine einfache Verschiebe- oder Verfahrbewegung kann die Werkstückweiche ansteuerbar sein.

Vorteilhafterweise ist vorgesehen, dass der Anschlagbalken dreiecksförmig ausgebildet ist, insbesondere in Form eines rechtwinkligen Dreiecks, wobei die Anschlagfläche vertikal und die Führungsfläche ausgehend von dem höchsten Punkt der Anschlagfläche fallend ausgerichtet ist. Dies stellt einen konstruktiv einfachen Aufbau dar.

Des Weiteren ist bevorzugt vorgesehen, dass der Anschlagbalken durch Führungen verfahrbar angesteuert ist, welche sich vorzugsweise rechtwinklig zur Längsseite der Entladeeinrichtung erstrecken und insbesondere an die Werkstückauflage angrenzen und/oder zwischen den zwei benachbarten Werkstückauflagen positioniert sind. Dies ermöglicht, dass auch größere Längen des Anschlagbalkens verfahrbar geführt sind. Auch beim Überführen des Werkstücks von der Entladeeinrichtung auf die Werkstückauflage kann eine hinreichende Abstützung des Anschlagbalkens ermöglicht sein.

Bevorzugt bildet der Anschlagbalken mit einer vorbestimmten Länge und zumindest zwei Führungen ein Grundmodul. Des Weiteren können Ergänzungs- oder Anbaumodule vorgesehen sein, welche an den Anschlagbalken in einer weiteren vorbestimmten Länge zumindest eine Führung aufweisen. Dadurch kann eine flexible Anpassung der Ausschleuseinrichtung an verschiedene Längen der Entladeeinrichtungen ermöglicht sein. Die Führungen können bevorzugt an diesem oberen Bereich zumindest einen Werkstückauflageabschnitt aufweisen. Dadurch kann auch eine Auflage für längere Werkstücke gegeben sein.

Die Werkstückweiche kann gemäß einer alternativen Ausführungsform als eine schwenkbare Klappe ausgebildet sein, welche zwischen der Längsfördereinrichtung und der Werkstückauflage positioniert ist. Solche schwenkbaren Klappen ermöglichen einen einfachen mechanischen Aufbau und sind in der Ansteuerung kostengünstig.

Bevorzugt ist vorgesehen, dass eine Oberseite der schwenkbaren Klappe als Führungsfläche zum Schließen des Spalts zwischen der Längsfördereinrichtung und der Werkstückauflage ausgebildet ist und eine Unterseite der schwenkbaren Klappe als Anschlag ausgebildet ist, der ein Überführen des bearbeiteten Werkstücks von der Entladeeinrichtung auf die Werkstückauflage ermöglicht. Nach einer bevorzugten einfachen Ausgestaltung kann die schwenkbare Klappe plattenförmig ausgebildet sein.

Gemäß einer weiteren bevorzugten Ausführungsform ist vorgesehen, dass die Längsfördereinrichtung in der Höhe verfahrbar ist. Dadurch kann eine Anpassung an verschieden große Durchmesser des rohr- oder stangenförmigen Werkstücks ermöglicht sein, um beim Ausschleusen die Fallhöhe von der Entladeeinrichtung auf die Längsfördereinrichtung zu reduzieren. Dadurch können auch Beschädigungen an dem bearbeiteten Werkstück reduziert werden. Zudem kann eine Geräuschreduzierung ermöglicht sein.

Gemäß einer bevorzugten Ausgestaltung der Längsfördereinrichtung ist vorgesehen, dass an die Werkstückauflage angrenzend ein Anschlag vorgesehen ist, der mit der Längsfördereinrichtung gemeinsam in der Höhe verfahrbar ist. Beispielsweise in Kombination mit dem vorbeschriebenen Anschlagbalken kann ermöglicht sein, dass die Transportebene der Längsfördereinrichtung nahezu bündig zu einer an der Entladeeinrichtung vorgesehenen Abführfläche positioniert werden kann und dennoch ein Überführen auf die Werkstückauflage verhindert wird.

Alternativ oder zusätzlich kann die Transportebene der Längsfördereinrichtung neigbar ausgebildet sein. Mit anderen Worten kann es vorgesehen sein, dass ein entladeseitiges Ende der Transportebene mittels einer Hubvorrichtung der Längsfördereinrichtung an einem entladeseitigen Lagerpunkt der Transportebene angehoben werden kann, wobei die Transportebene um einen bearbeitungsseitigen Lagerpunkt drehbar gelagert ist. Die Längsfördereinrichtung kann ein Transportband umfassen, dessen Oberfläche die Transportebene der Längsfördereinrichtung bildet. Durch die Höhenverstellbarkeit des entladeseitigen Endes der Transportebene kann die Übergabeposition eines Werkstücks auf einfache Weise an die Höhe einer Transport- oder Lagereinheit (z.B. eine Palette oder ein Rungengestell) angepasst werden.

Vorteilhafterweise ist vorgesehen, dass die Entladeeinrichtung entlang der Längsseite Anschlussschnittstellen zur Montage der Längsfördereinrichtung und/oder der Führungen für den Anschlagbalken und/oder der Werkstückauflage aufweist. Dadurch ist ein modularer Aufbau vorgesehen. Auch kann eine beliebige Anpassung an verschiedene Längen der Entladeeinrichtung ermöglicht sein.

Die der Erfindung zugrundeliegende Aufgabe wird des Weiteren durch eine Bearbeitungsmaschine für stangen- oder rohrförmige Werkstücke gelöst, welche eine Beladestation zur Aufnahme von zu bearbeitenden Werkstücken aufweist, von der aus das zu bearbeitende Werkstück einer Bearbeitungsstation zugeführt wird und der Bearbeitungsstation nachgeschalten eine Entladestation umfasst, in welche bearbeitete Werkstücke überführbar sind, wobei die Entladestation zumindest eine Ausschleuseinrichtung nach einer der vorbeschriebenen Ausführungsformen umfasst.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht einer Bearbeitungsmaschine zum schneidenden Bearbeiten von rohr- oder stangenförmigen Werkstücken,
- Figur2: eine perspektivische Ansicht auf eine Entladestation mit einer Entladeeinrichtung und einer Ausschleuseinrichtung,
- Figur 3: eine weitere perspektivische Ansicht auf die Ausschleuseinrichtung gemäß Figur 2,
- Figur 4: eine schematische Schnittansicht der Ausschleuseinrichtung in einer Schließposition,
- Figur 5: eine schematische Schnittansicht der Ausschleuseinrichtung gemäß Figur 4 in einer Ausschleusposition,
- Figur 6: eine schematische Schnittansicht einer alternativen Ausführungsform der Ausschleuseinrichtung gemäß 4 und 5,
- Figur 7: eine weitere alternative Ausführungsform der Ausschleuseinrichtung gemäß Figur 4 und 5,
- Figur 8: eine schematische Ansicht auf eine Entladestation mit mehreren Modulen von Ausschleuseinrichtungen, und
- Figuren 9a-b: die Frontansicht einer Längsfördereinrichtung mit parallel ausgerichteter Transportebene (Figur 9a) und mit geneigter Transportebene (Figur 9b).

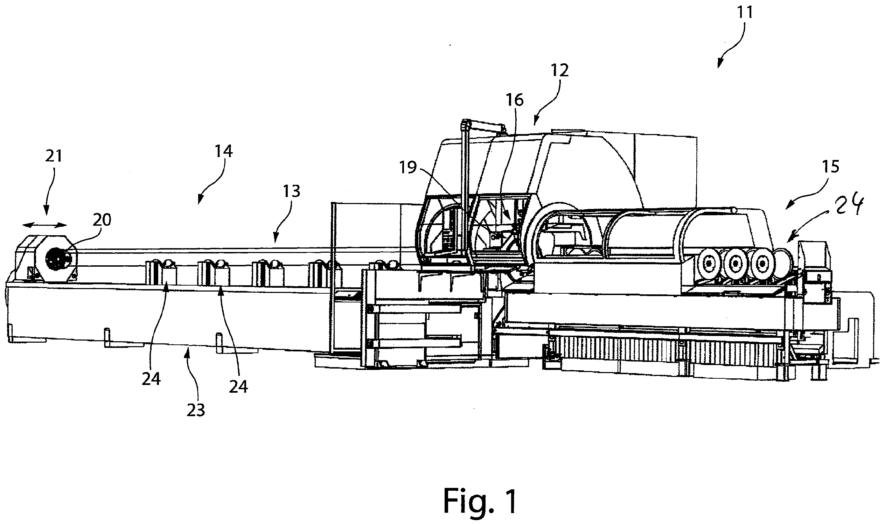

In Figur 1 ist perspektivisch eine Bearbeitungsmaschine 11 zum schneidenden Bearbeiten von rohr- oder stangenförmigen Werkstücken 13 dargestellt. Unter rohr- oder stangenförmigen Werkstücken 13 werden längliche Körper verstanden, deren Länge in der Regel wesentlich größer als ihr Querschnitt ist und die aus einem im Wesentlichen unflexiblen Material gefertigt sind. Solche Werkstücke 13 können beliebige offene oder geschlossene Querschnittsformen und/oder Profile aufweisen, wobei am Gebräuchlichsten Rund- oder Rechteckrohre sind.

Die Bearbeitungsmaschine 11 umfasst zur Bearbeitung der Werkstücke 13 eine Bearbeitungsstation 12, insbesondere eine Laserschneidstation sowie eine Beladestation 14 und eine Entladestation 15. In der Laserschneidstation 12 ist ein Laserschneidkopf 16 vorgesehen, mit dem die Werkstücke 13 in nicht näher dargestellten Rohrteilstücke abgelängt und/oder zusätzlich bearbeitet werden. Die Werkstücke 13 werden nahe der Bearbeitungsstelle in einem Durchschiebespannfutter 19 gelagert. Gegenüberliegend ist das Werkstück 13 in einer Dreh- und Vorschubeinrichtung 21 aufgenommen, welche gegenüber dem Laserschneidkopf 16 in der Laserschneidstation 12 in der für die Bearbeitung erforderlichen Weise entlang eines Maschinengrundgestells 23 verfahrbar ist. Im Einzelnen werden die zu bearbeitenden Werkstücke 13 mittels der Dreh- und Vorschubstation 11 gegenüber dem Laserschneidkopf 16 in Rohrlängsrichtung nachgesetzt und zur Erstellung eines Trennschnittes um die Rohrlängsachse gedreht. Zwischen der Dreh- und Vorschubeinrichtung 21 und dem Durchschiebespannfutter 19 sind die Werkstücke 13 auf Rohrunterstützungen 24 gelagert. Mit fortschreitender Rohrwerkstückbearbeitung werden die Rohrunterstützungen 24 in das Maschinengestell 23 abgesenkt und können dann von der Dreh- und Vorschubeinrichtung 21 überfahren werden.

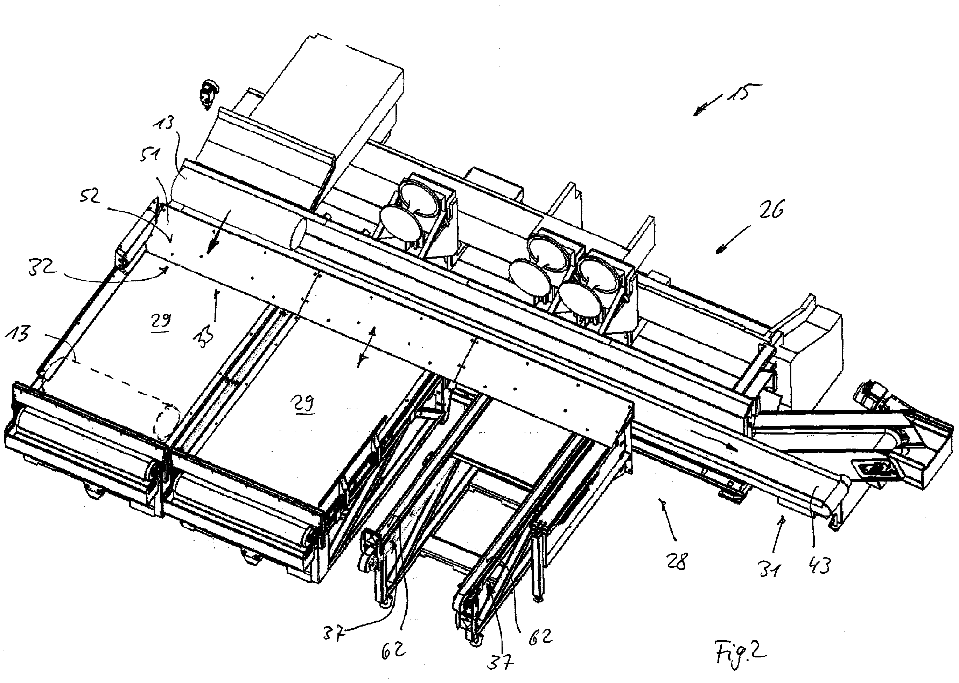

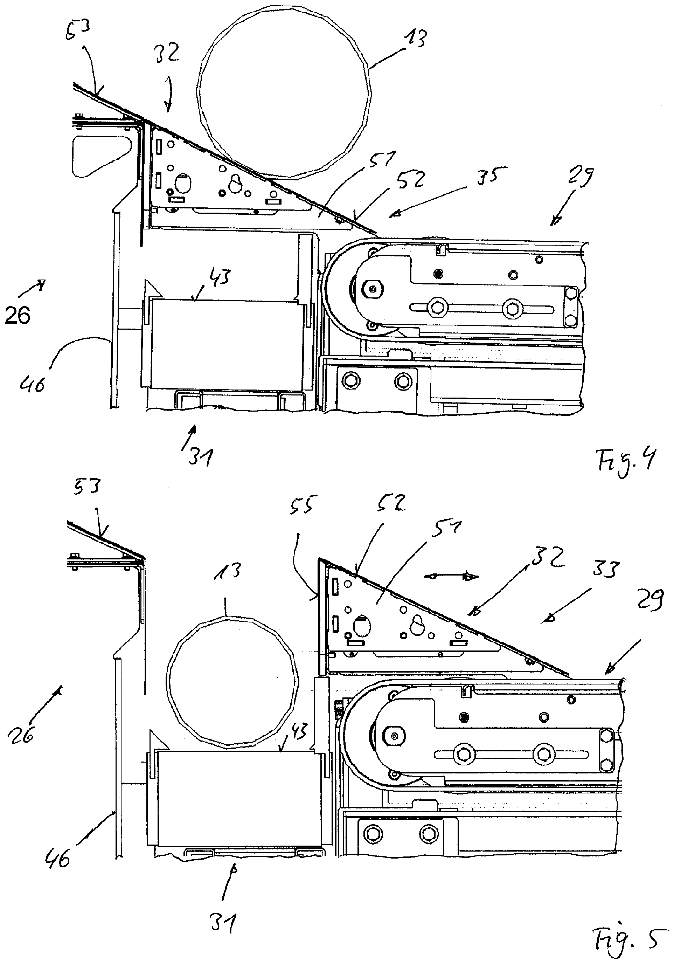

In Figur 2 ist eine perspektivische Ansicht auf die Entladestation 15 dargestellt. Diese Entladestation 15 umfasst eine Entladeeinrichtung 26, welche die aus der Bearbeitungsstation 12 bearbeiteten und herausgeführten Werkstücke 13 aufnimmt. Seitlich zur Entladeeinrichtung 26 ist eine Ausschleuseinrichtung 28 vorgesehen, durch welche die bearbeiteten Werkstücke 13 beispielsweise auf zumindest eine Werkstückauflage 29 überführbar sind. Die Ausschleuseinrichtung 28 umfasst eine Längsfördereinrichtung 31, welche entlang einer Längsseite der Entladeeinrichtung 26 positioniert und insbesondere fixiert ist. Diese Längsfördereinrichtung 31 ist zwischen der Entladeeinrichtung 26 und der Werkstückauflage 29 vorgesehen. Die Ausschleuseinrichtung 28 umfasst des Weiteren eine Werkstückweiche 32, welche aus einer in Figur 2 dargestellten Ausschleusposition 33 in eine Schließposition 35 (Figur 4) überführbar ist. In der Ausschleusposition 33 der Werkstückweiche 32 wird das bearbeitete Werkstück 13 auf die Längsfördereinrichtung 31 übergeführt und darauffolgend in Längsrichtung der Längsfördereinrichtung 31 aus der Entladestation 15 herausgeführt. Am Ende der Entladestation 15 und der Längsfördereinrichtung 31 zugeordnet kann für eine Entladeautomatisierung zumindest eine Handhabungseinrichtung, insbesondere ein Portalroboter, vorgesehen sein.

Die Werkstückweiche 32 ist zwischen der Ausschleusposition 33 und der Schließposition 35 verfahrbar geführt. Hierfür sind Führungen 37 vorgesehen, welche an die Werkstückauflage 29 angrenzen und/oder auch zwischen zwei benachbarten Werkstückauflagen 29 vorgesehen sind. Beispielsweise kann eine Führung 37 in Form eines Festlagers und eine benachbarte Führung in Form eines Loslagers ausgebildet sein. Die Verfahrbewegung der Werkstückweiche 32 kann durch einen motorischen Antrieb und/oder durch einen Hubzylinder, einen Linearantrieb oder dergleichen erfolgen.

Die Werkstückweiche 32 erstreckt sich längs der Entladeeinrichtung 26. Vorzugsweise ist an eine Oberseite der Werkstückweiche 32 eine durchgehend ebene Fläche vorgesehen.

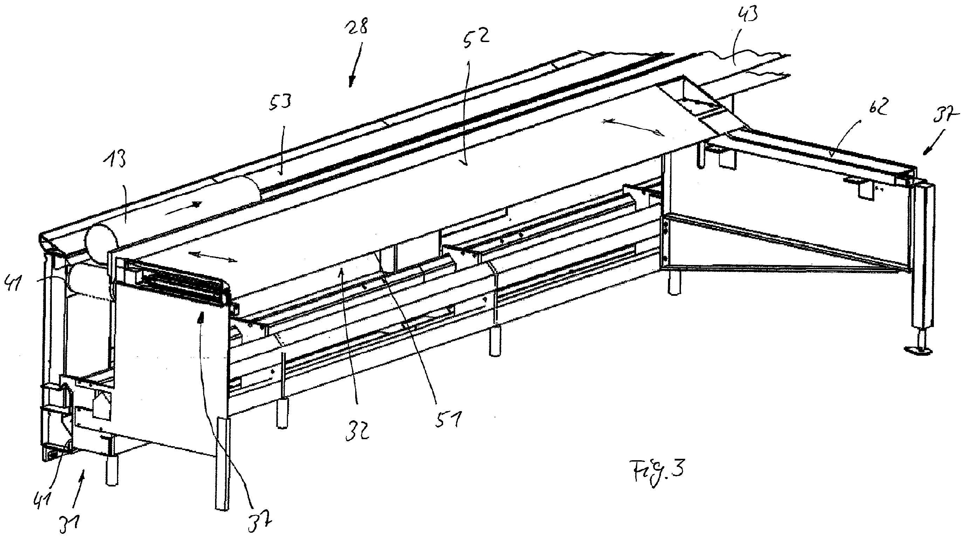

In Figur 3 ist eine weitere perspektivische Ansicht der Ausschleuseinrichtung 28 dargestellt. Diese Ausschleuseinrichtung 28 weist bevorzugt Montageschnittstellen 41 auf, sodass in einfacher Weise die Längsfördereinrichtung 31 an der Entladeeinrichtung 26 montierbar ist und beispielsweise auch die Führungen 37 an der Längsfördereinrichtung 31 montierbar sind. Analoges gilt für die in Figur 3 nicht näher dargestellte Werkstückauflage 29.

Die Längsfördereinrichtung 31 ist bevorzugt mit einem umlaufenden Transportband 43 ausgebildet. Dies weist den Vorteil auf, dass in einfacher Weise eine individuelle Anpassung an die Länge der Entladeeinrichtung 26 vorgesehen ist. Bevorzugt ist die Länge der Längsfördereinrichtung 31 länger als die Länge der Entladeeinrichtung 26 ausgebildet. Die Länge der Werkstückweiche 32 kann hingegen gleich oder kürzer als die Länge der Entladeeinrichtung 26 ausgebildet sein.

In Figur 4 ist eine schematische Schnittansicht der Ausschleuseinrichtung 28 gemäß Figur 2 dargestellt. Zwischen einem Grundgestell 46 der Entladeeinrichtung 26 und der Werkstückauflage 29 ist die Längsfördereinrichtung 31 positioniert. Die Werkstückweiche 32 ist bei dieser Ausführungsform als ein sogenannter Anschlagbalken 51 ausgeführt. Dieser Anschlagbalken 51 weist eine geneigte oder abfallende Führungsfläche 52 auf, welche einen Spalt zwischen einer Abführfläche 53 der Entnahmeeinrichtung 26 und der Werkstückauflage 29 in der Schließposition 35 schließt. Bevorzugt grenzt die Führungsfläche 52 bündig an die Abführfläche 53 an. Die Längsfördereinrichtung 31 ist unterhalb der Ebene der Werkstückauflage 29 angeordnet, sodass durch eine geradlinige Verfahrbewegung des Anschlagbalkens 51 ein Überführen in die Schließposition 35 ermöglicht ist.

In Figur 5 ist die Ausschleuseinrichtung 28 in einer Ausschleusposition 33 vorgesehen. In dieser Ausschleusposition 33 ist der Anschlagbalken 51 nach rechts verfahren, sodass dieser teilweise die Werkstückauflage 29 überdeckt. An dem Anschlagbalken 51 ist eine Anschlagfläche 55 vorgesehen. Diese ist vorzugsweise in vertikaler Richtung ausgerichtet. Diese Anschlagfläche 55 ist zur Längsfördereinrichtung 31 und vorzugsweise rechtwinklig zur Transportebene des umlaufenden Transportbandes 43 ausgerichtet. Diese Anschlagfläche 55 sperrt ein Überführen des Werkstücks 13 auf die Werkstückauflage 29. Vielmehr wird das Werkstück 13 auf der Längsfördereinrichtung 31 positioniert. Darauffolgend kann durch eine Ansteuerung des Transportbandes 43 das Werkstück 13 aus der Entladestation 15 herausgefahren werden. Bei dieser Ausführungsform kann vorgesehen sein, dass die Längsfördereinrichtung 31 stationär auf einer vorbestimmten Höhe angeordnet ist.

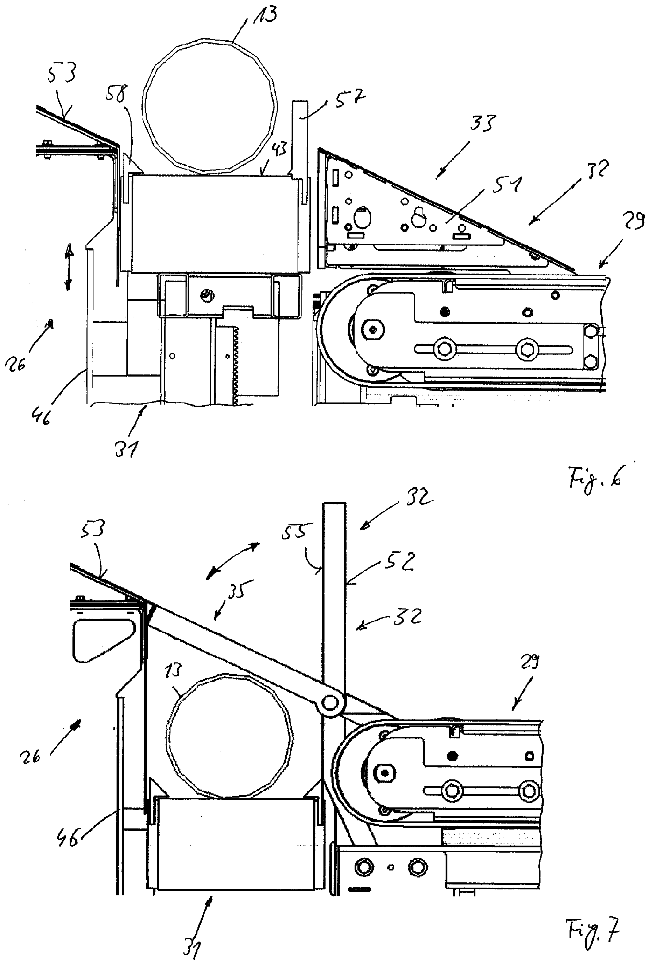

In Figur 6 ist eine alternative Ausführungsform der Ausschleusvorrichtung 28 gemäß den Figuren 4 und 5 dargestellt. Bei dieser Ausführungsform ist vorgesehen, dass die Längsfördereinrichtung 31 in der Höhe verfahrbar ausgebildet ist. Bevorzugt ist an der Längsfördereinrichtung 31 ein Anschlag 57 positioniert. Dieser Anschlag 57 ist fest an der Längsfördereinrichtung 31 und der Werkstückauflage 29 zugewandt angeordnet. Dadurch kann beispielsweise ermöglicht werden, dass das Werkstück 13 von der Abführfläche 53 ausschließlich rollend auf die Längsfördereinrichtung 31 übergeführt wird. Zusätzlich kann ein Spaltüberbrückungselement 58 der Abführfläche 53 zugewandt an der Längsfördereinrichtung 31 vorgesehen sein.

Die Höhenverstellbarkeit der Längsfördereinrichtung 31 kann auch bei den weiteren Ausführungsformen vorgesehen sein.

In Figur 7 ist eine weitere alternative Ausführungsform der Werkstückweiche 32 dargestellt. Bei dieser Ausführungsform ist die Werkstückweiche 32 als eine schwenkbare Klappe vorgesehen. Auf einer Oberseite der schwenkbaren Klappe ist die Führungsfläche 52 vorgesehen, welche in einer Schließposition 35 den Spalt zwischen der Abführfläche 53 und der Werkstückauflage 29 schließt. In einer Ausschleusposition 33 bildet eine untere Fläche der schwenkbaren Klappe eine Anschlagfläche 55, sodass das auszuschleusende und bearbeitete Werkstück 13 zur Auflage auf der Längsfördereinrichtung 31 übergeführt wird.

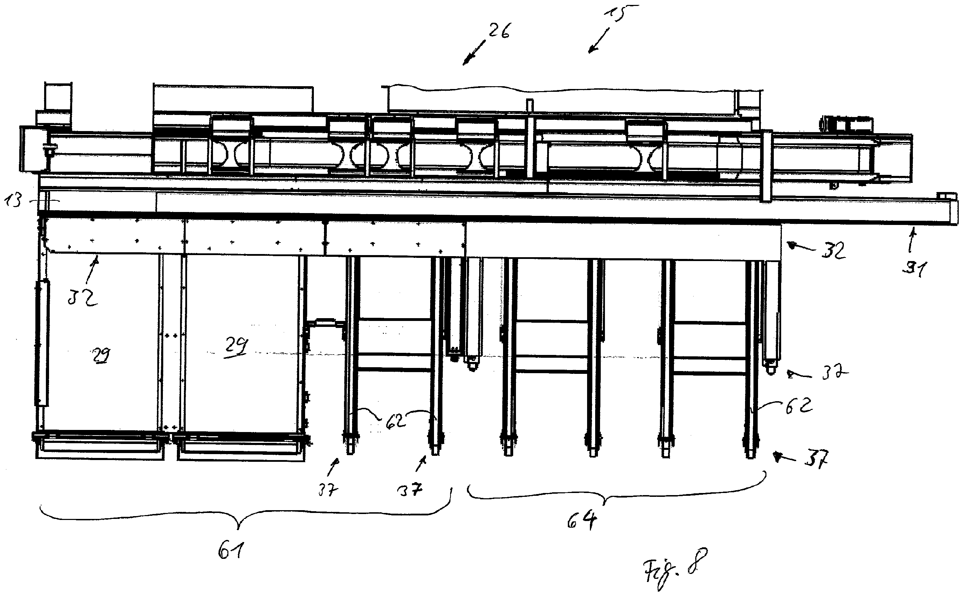

In Figur 8 ist eine schematische Ansicht von oben auf die Entladestation 15 dargestellt. Bei einer sehr lang ausgebildeten Entladeeinrichtung 26 kann die Ausschleuseinrichtung 28 durch einen modularen Aufbau daran anpassbar sein. Beispielsweise ist ein Grundmodul 61 vorgesehen. Dieses Grundmodul 61 besteht aus zwei aneinandergrenzenden Werkstückauflagen 29 sowie einer Werkstückweiche 32 und der Längsfördereinrichtung 31. Benachbart zu den Werkstückauflagen 29 können in der Fläche verringerte Werkstückauflageabschnitte 62 vorgesehen sein, die beispielsweise an einer Oberseite von Führungen 37 vorgesehen sein können. Bei längeren Werkstücken 13 ist es nicht mehr erforderlich, eine vollflächige Unterstützung vorzusehen, wie dies bei der Werkstückauflage 29 der Fall ist. Um die Ausschleuseinrichtung 28 an verschiedene Längen der Entladeeinrichtung 26 anzupassen, kann ein Anbaumodul 64 vorgesehen sein. Dieses Anbaumodul 64 kann wiederum die Werkstückweiche 32 sowie Führungen 37 umfassen, auf denen die Werkstückweiche 32 geführt ist. Zusätzlich kann an den Führungen 37 jeweils eine Werkstückauflageabschnitt 62 vorgesehen sein. Die Werkstückweiche 32 des Grundmoduls 61 und des Anbaumoduls 64 sind miteinander verbunden, sodass eine gemeinsame Verfahrbewegung zwischen der Schließposition 35 und der Ausschlussposition 33 gegeben ist.

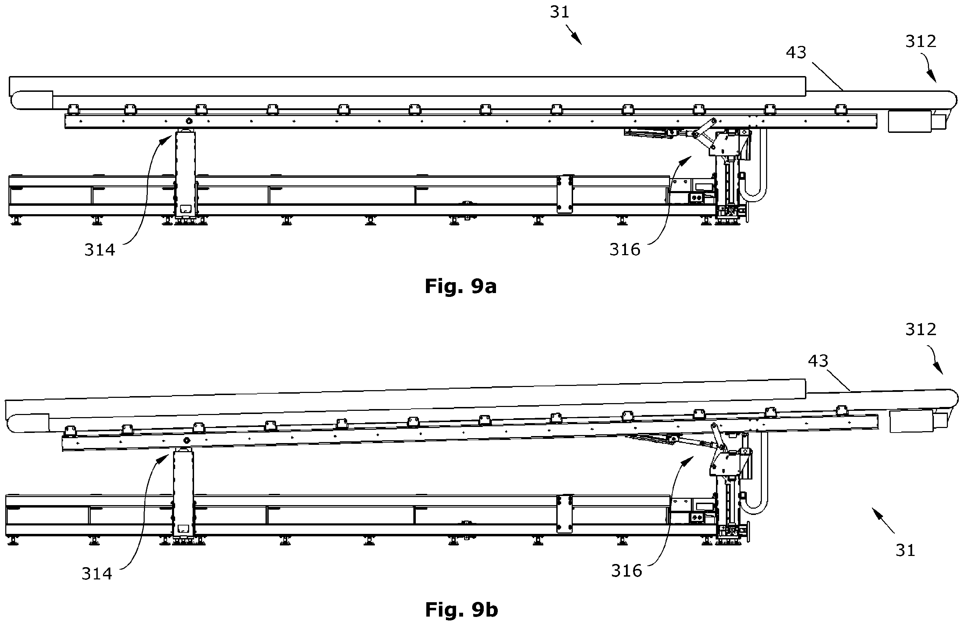

In den Figuren 9a und 9b ist eine Variante einer Längsfördereinrichtung 31 jeweils in einer Frontansicht dargestellt. Gemäß dieser Variante ist ein in entladeseitiges Ende 312 der Längsfördereinrichtung 31 höhenverstellbar ausgebildet, sodass Werkstücke 13 auf einfache Weise in unterschiedlichen Höhen mittels des Transportbandes 43 an eine nachgelagerte Transport- oder Lagereinheit (z.B. Eine Palette, ein Rungengestell o.ä.) übergeben werden können. Das entladeseitige Ende 312 der Längsfördereinrichtung 31 kann vorzugsweise mit einem entladeseitigen Längsende des Transportbandes 43 zusammenfallen. Figur 9a zeigt die Längsfördereinrichtung 31 in einem Grundzustand, in dem das Transportband 43 im Wesentlichen horizontal ausgerichtet ist. Figur 9b zeigt die Längsfördereinrichtung 31 in einem geneigten Zustand. Das Transportband 43 wird an einem entladeseitigen Lagerpunkt mittels einer Hubvorrichtung 316 angehoben, während es an einem bearbeitungsseitig angeordneten Drehlager 314 auf der ursprünglichen Höhe bleibt.

## Patentansprüche

1. Entladestation für eine Bearbeitungsstation (12) zum schneidenden Bearbeiten von rohr- oder stangenförmigen Werkstücken (13),
- mit einer Entladeeinrichtung (26), welche aus einer Bearbeitungsstation (12) herausgeführte Werkstücke (13) aufnimmt,
- mit zumindest einer Werkstückauflage (29), in welche das zumindest eine Werkstück (13) aus der Entladeeinrichtung (26) überführbar ist,
- mit einer Ausschleuseinrichtung (28) zum selektiven Ausschleusen von Werkstücken (13) aus der Entladeeinrichtung (26), **dadurch gekennzeichnet, dass** die Ausschleuseinrichtung eine Längsfördereinrichtung (31) umfasst, die sich zumindest zwischen der Entladeeinrichtung (26) und der Werkstückauflage (29) erstreckt und welche eine Werkstückweiche (32) umfasst, durch welche das aus der Entladeeinrichtung (26) abgeführte Werkstück (13) in die Längsfördereinrichtung (31) oder auf die Werkstückauflage (29) überführbar ist.

2. Entladestation nach Anspruch 1, **dadurch gekennzeichnet, dass** die Ausschleuseinrichtung (28) an einer oder beiden Längsseiten der Entladeeinrichtung (26) vorgesehen ist.

3. Entladestation nach Anspruch 1 oder 2, **dadurch gekennzeichnet, dass** die Werkstückweiche (32) eine Führungsfläche (52) aufweist, welche zum Überführen des Werkstücks (13) von der Entladeeinrichtung (26) zur Werkstückauflage (29) einen durch die Längsfördereinrichtung (31) gebildeten Spalt schließt.

4. Entladestation nach Anspruch 3, **dadurch gekennzeichnet, dass** die Werkstückweiche (32) als ein Anschlagbalken (51) ausgebildet ist, der sich zumindest teilweise entlang der Entladeeinrichtung (26) erstreckt und relativ zur Werkstückauflage (29) verfahrbar ist.

5. Entladestation nach Anspruch 4, **dadurch gekennzeichnet, dass** der Anschlagbalken (51) die Führungsfläche (52) und eine Anschlagfläche (55) aufweist, wobei in einer Schließposition (35) zur Längsfördereinrichtung (31) die Führungsfläche (52) den Spalt schließt und in einer Ausschleusposition (53) des Anschlagbalkens (51) dessen Anschlagfläche (55) das Werkstück (13) in die Längsfördereinrichtung (31) überführt.

6. Entladestation nach Anspruch 4 oder 5, **dadurch gekennzeichnet, dass** der Anschlagbalken (51) dreiecksförmig ausgebildet ist, insbesondere als rechtwinkliges Dreieck, wobei die Anschlagfläche (55) vertikal und die Führungsfläche (52) ausgehend von einem höchsten Punkt der Anschlagfläche fallend ausgerichtet ist.

7. Entladestation nach einem der Ansprüche 4 bis 6, **dadurch gekennzeichnet, dass** der Anschlagbalken (51) durch Führungen (37) verfahrbar aufgenommen ist, welche sich vorzugsweise rechtwinklig zur Längsseite der Entladeeinrichtung (26) erstrecken und insbesondere an die zumindest eine Werkstückauflage (29) angrenzen und/oder zwischen zwei benachbarten Werkstückauflagen (29) positioniert sind.

8. Entladestation nach Anspruch 7, **dadurch gekennzeichnet, dass** die Führungen (37) zumindest einen Werkstückauflageabschnitt (62) aufweisen, zu denen der Anschlagbalken (51) relativ verfahrbar ist.

9. Entladestation nach einem der vorhergehenden Ansprüche, **dadurch gekennzeichnet, dass** die Werkstückweiche (32) mit zumindest einer Werkstückauflage (29) und Führungen (37) als ein Grundmodul (61) ausgebildet ist und zumindest ein Ausbaumodul (64) vorgesehen ist, welches eine Werkstückweiche (32) in einer vorbestimmten Länge und zumindest zwei Führungen (37) umfasst.

10. Entladestation nach einem der Ansprüche 1 bis 3, **dadurch gekennzeichnet, dass** die Werkstückweiche (32) als eine schwenkbare Klappe ausgebildet ist, welche zwischen der Längsfördereinrichtung (31) und der Werkstückauflage (29) positionierbar ist.

11. Entladestation nach Anspruch 10, **dadurch gekennzeichnet, dass** eine Oberseite der schwenkbaren Klappe als Führungsfläche (52) zum Schließen des Spalts zwischen der Längsfördereinrichtung (31) und der Werkstückauflage (29) ausgebildet ist und eine Unterseite der schwenkbaren Klappe als Anschlagfläche (55) ausgebildet ist, welche ein Überführen des Werkstücks (13) auf die Werkstückauflage (29) sperrt.

12. Entladestation nach einem der vorhergehenden Ansprüche, **dadurch gekennzeichnet, dass** die Längsfördereinrichtung (31) in der Höhe einstellbar und verfahrbar ist.

13. Entladestation nach Anspruch 12, **dadurch gekennzeichnet, dass** die Längsfördereinrichtung (31) an die Werkstückauflage (29) angrenzend einen Anschlag (57) aufweist, der gemeinsam in der Höhe mit der Längsfördereinrichtung (31) verfahrbar ist.

14. Entladestation nach einem der vorhergehenden Ansprüche, **dadurch gekennzeichnet, dass** die Entladeeinrichtung (26) entlang deren Längsseite Montageschnittstellen (41) zur Montage der Längsfördereinrichtung (31) und/oder der Führungen (37) und/oder der Werkstückauflage (29) aufweist.

15. Bearbeitungsmaschine für stangen-oder rohrförmige Werkstücke (13) mit einer Beladestation (14) zur Aufnahme des zu bearbeitenden Werkstücks (13), von der aus das Werkstück (13) zur Bearbeitung einer Bearbeitungsstation (12) zuführbar ist,
- mit einer Entladestation (15), welche zur Bearbeitungsstation (12) nachfolgend angeordnet ist und in welche das bearbeitete Werkstück (13) überführbar ist,
**dadurch gekennzeichnet,**
- **dass** die Entladestation (15) nach einem der Ansprüche 1 bis 14 ausgebildet ist.

## Claims

1. An unloading station for a processing station (12) for cutting tubular or bar-shaped workpieces (13), comprising
- an unloading apparatus (26) which receives workpieces (13) that are guided out of the processing station (12),
- at least one workpiece support (29) to which the at least one workpiece (13) can be transferred from the unloading apparatus (26),
- a discharging apparatus (28) for selectively discharging workpieces (13) from the unloading apparatus (26), **characterized in that** the discharging apparatus comprises a longitudinal conveyor apparatus (31) that extends at least between the unloading apparatus (26) and the workpiece support (29) and comprises a workpiece crossover (32) which allows the workpiece (13) delivered from the unloading apparatus (26) to be transferred to the longitudinal conveyor apparatus (31) or onto the workpiece support (29).

2. The unloading station according to claim 1, **characterized in that** the discharging apparatus (28) is provided on one or both longitudinal sides of the unloading apparatus (26).

3. The unloading station according to claim 1 or 2, **characterized in that** the workpiece crossover (32) has a guide face (52) which, in order to transfer the workpiece (13) from the unloading apparatus (26) to the workpiece support (29), closes a gap formed by the longitudinal conveyor apparatus (31).

4. The unloading station according to claim 3, **characterized in that** the workpiece crossover (32) is designed as a stop beam (51) which extends at least partially along the unloading apparatus (26) and can be displaced relative to the workpiece support (29).

5. The unloading station according to claim 4, **characterized in that** the stop beam (51) comprises the guide face (52) and a stop face (55), wherein in a closed position (35) relative to the longitudinal conveyor apparatus (31) the guide face (52) closes the gap, and in a discharging position (53) of the stop beam (51) its stop face (55) transfers the workpiece (13) to the longitudinal conveyor apparatus (31).

6. The unloading station according to claim 4 or 5, **characterized in that** the stop beam (51) is designed in a triangular shape, in particular as a right-angled triangle, wherein the stop face (55) is aligned vertically and the guide face (52) is aligned in a downward direction starting from a highest point of the stop face.

7. The unloading station according to one of claims 4 to 6, **characterized in that** the stop beam (51) is displaceably accommodated by guides (37) which extend preferably at right angles relative to the longitudinal side of the unloading apparatus (26) and in particular adjoin the at least one workpiece support (29) and/or are positioned between two adjacent workpiece supports (29).

8. The unloading station according to claim 7, **characterized in that** the guides (37) have at least one workpiece support section (62) relative to which the stop beam (51) is displaceable.

9. The unloading station according to one of the preceding claims, **characterized in that** the workpiece crossover (32) is designed as a base module (61) having at least one workpiece support (29) and guides (37), and at least one extension module (64) is provided which comprises a workpiece crossover (32) of a pre-determined length and at least two guides (37).

10. The unloading station according to one of claims 1 to 3, **characterized in that** the workpiece crossover (32) is designed as a pivotable flap which can be positioned between the longitudinal conveyor apparatus (31) and the workpiece support (29).

11. The unloading station according to claim 10, **characterized in that** an upper side of the pivotable flap is designed as a guide face (52) for closing the gap between the longitudinal conveyor apparatus (31) and the workpiece support (29), and a lower side of the pivotable flap is designed as a stop face (55) that blocks a transfer of the workpiece (13) onto the workpiece support (29).

12. The unloading station according to one of the preceding claims, **characterized in that** the longitudinal conveyor apparatus (31) is height-adjustable and displaceable.

13. The unloading station according to claim 12, **characterized in that** the longitudinal conveyor apparatus (31) has a stop (57) adjacent to the workpiece support (29), the stop being vertically displaceable together with the longitudinal conveyor apparatus (31).

14. The unloading station according to one of the preceding claims, **characterized in that** the unloading apparatus (26) has assembly interfaces (41) along its longitudinal side, the interfaces allowing assembly of the longitudinal conveyor apparatus (31) and/or of the guides (37) and/or of the workpiece support (29).

15. A processing machine for rod-shaped or tubular workpieces (13) with a loading station (14) for receiving the workpiece (13) to be processed, it being possible to feed the workpiece (13) from the loading station to a processing station (12) for processing, comprising
- an unloading station (15) arranged after the processing station (12), it being possible to transfer the workpiece (13) to be processed to the unloading station,
**characterized in that**,
- the unloading station (15) is designed according to one of claims 1 to 14.

## Revendications

1. Poste de déchargement pour un poste de traitement (12) destiné à la découpe de pièces (13) en forme de tube ou de tige, comportant
- un dispositif de déchargement (26) qui reçoit des pièces (13) provenant d'un poste de traitement (12),
- au moins un support de pièce (29) dans lequel ladite au moins une pièce (13) peut être transférée depuis le dispositif de déchargement (26),
- un dispositif d'évacuation (28) pour l'évacuation sélective de pièces (13) hors du dispositif de déchargement (26), **caractérisé en ce que** le dispositif d'évacuation comprend un dispositif de transport longitudinal (31) qui s'étend au moins entre le dispositif de déchargement (26) et le support de pièce (29) et qui comprend un aiguillage de pièce (32) grâce auquel la pièce (13) évacuée du dispositif de déchargement (26) peut être transférée dans le dispositif de transport longitudinal (31) ou sur le support de pièce (29).

2. Poste de déchargement selon la revendication 1, **caractérisé en ce que** le dispositif d'évacuation (28) est pourvu sur un des deux ou sur les deux côtés longitudinaux du dispositif de déchargement (26).

3. Poste de déchargement selon la revendication 1 ou 2, **caractérisé en ce que** l'aiguillage de pièce (32) comporte une surface de guidage (52) qui ferme un intervalle formé par le dispositif de transport longitudinal (31) pour transférer la pièce (13) du dispositif de déchargement (26) vers le support de pièce (29).

4. Poste de déchargement selon la revendication 3, **caractérisé en ce que** l'aiguillage de pièce (32) est conçu comme une barre de butée (51) qui s'étend au moins en partie le long du dispositif de déchargement (26) et est mobile par rapport au support de pièce (29).

5. Poste de déchargement selon la revendication 4, **caractérisé en ce que** la barre de butée (51) présente la surface de guidage (52) et une surface de butée (55), dans lequel dans une position fermée (35) par rapport au dispositif de transport longitudinal (31), la surface de guidage (52) ferme l'intervalle, et dans une position d'évacuation (53) de la barre de butée (51), la surface de butée (55) de celle-ci transfère la pièce (13) dans le dispositif de transport longitudinal (31).

6. Poste de déchargement selon la revendication 4 ou 5, **caractérisé en ce que** la barre de butée (51) présente une forme triangulaire, en particulier une forme de triangle rectangle, dans lequel la surface de butée (55) est verticale et la surface de guidage (52) provenant d'un point le plus haut de la surface de butée est orientée de manière descendante.

7. Poste de déchargement selon l'une des revendications 4 à 6, **caractérisé en ce que** la barre de butée (51) est reçue de manière mobile par des guides (37) qui s'étendent de préférence perpendiculairement au côté longitudinal du dispositif de déchargement (26) et sont en particulier adjacents audit au moins un support de pièce (29) et/ou sont positionnés entre deux supports de pièce adjacents (29).

8. Poste de déchargement selon la revendication 7, **caractérisé en ce que** les guides (37) comportent au moins une section de support de pièce (62) par rapport à laquelle la barre de butée (51) est mobile.

9. Poste de déchargement selon l'une des revendications précédentes, **caractérisé en ce que** l'aiguillage de pièce (32) est conçu comme un module de base (61) avec au moins un support de pièce (29) et des guides (37), et **en ce qu'**au moins un module d'extension (64) est pourvu, qui comporte un aiguillage de pièce (32) de longueur prédéterminée et au moins deux guides (37).

10. Poste de déchargement selon l'une des revendications 1 à 3, **caractérisé en ce que** l'aiguillage de pièce (32) est conçu comme un volet pivotant qui peut être positionné entre le dispositif de transport longitudinal (31) et le support de pièce (29).

11. Poste de déchargement selon la revendication 10, **caractérisé en ce qu'**une face supérieure du volet pivotant est conçue comme une surface de guidage (52) pour fermer l'intervalle entre le dispositif de transport longitudinal (31) et le support de pièce (29), et **en ce qu'**une face inférieure du volet pivotant est conçue comme une surface de butée (55) qui empêche le transfert de la pièce (13) vers le support de pièce (29).

12. Poste de déchargement selon l'une des revendications précédentes, **caractérisé en ce que** le dispositif de transport longitudinal (31) est réglable en hauteur et mobile.

13. Poste de déchargement selon la revendication 12, **caractérisé en ce que** le dispositif de transport longitudinal (31) comporte une butée (57) adjacente au support de pièce (29), qui est mobile en hauteur conjointement au dispositif de transport longitudinal (31).

14. Poste de déchargement selon l'une des revendications précédentes, **caractérisé en ce que** le dispositif de déchargement (26) comporte sur son côté longitudinal des interfaces de montage (41) pour le montage du dispositif de transport longitudinal (31) et/ou des guides (37) et/ou du support de pièce (29).

15. Machine de traitement pour pièces en forme de tige ou de tube (13) avec un poste de chargement (14) pour recevoir la pièce à traiter (13), à partir duquel la pièce à traiter (13) peut être amenée à un poste de traitement (12) pour son traitement, comportant
- un poste de déchargement (15), qui est agencé en aval du poste de traitement (12) et dans lequel la pièce traitée (13) peut être transférée,
**caractérisée en ce que**
- le poste de déchargement (15) est conçu selon l'une des revendications 1 à 14.
